# EUROPEAN PATENT APPLICATION

(11) **EP 4 732 680 A1**
(43) Date of publication of application: **29.04.2026**
(21) Application number: 25210724.8
(22) Date of filing: 23.10.2025
(51) Int. Cl.: A23N 1/02, B02C 13/00, C11B 1/04

(54) **CRUSHER OF A CRUSHING MACHINE HAVING REMOVABLE BLADES**

(30) Priority: 24.10.2024 IT 202400023760
(71) Applicant: PIERALISI MAIP SOCIETA' PER AZIONI, 60035 Jesi (AN) (IT)
(72) Inventor: GIARDINIERI, Simone, 60035 Jesi (AN) (IT); GASPARINI, Mauro, 60035 Jesi (AN) (IT); PIERAPOLI, Martina, 60019 Senigallia (AN) (IT)
(74) Representative: Baldi, Claudio

(57) **Abstract**

Crusher (100) of a crushing machine; wherein said crusher (100) comprises a hub (1) that is integrally and rotatably connected to a shaft (A) of the crushing machine, arms (3) projecting from the hub (1), one blade (4) for each arm (3), said blades (4) being disposed on a front face (31) of the arm (3); for each arm (3), the crusher (100) has connection means (7) configured to removably connect the blade (4) to the respective arm (3).

## Description

The present patent application for industrial invention relates to a crusher of a crushing machine having removable blades.

The sector of reference is the oil sector, i.e., the sector that processes oleaginous fruits, such as olives and the like, in order to obtain oil.

As it is known, both in the oil industry and in other vegetable oleaginous sources, olives or oleaginous fruits undergo a preliminary treatment, which is known as crushing, to break the fruits with the pit and produce a paste that is used in a subsequent kneading process.

The present invention relates specifically to the crushing of oleaginous fruits.

As it is known, crushing is used to break down oleaginous fruits, in particular olives, in order to release the oil contained in the vacuoles of the oleiferous cells. Moreover, crushing releases the endogenous enzymes that are responsible for the formation of the chemical and sensory characteristics of the oil (lipoxygenase, glycosidase, hydrolase, polyphenol oxidase, and peroxidase).

Currently, the most popular crushing machines comprise a crushing chamber where the oleaginous fruits are crushed to obtain the paste. The crushing chamber is laterally bounded by a circular grid and houses a rotating crusher comprising:
- a central hub, and
- arms protruding from the central hub whereon crushing bodies are mounted.

The crushing bodies can be:
- blades that extend substantially along the entire length of the arm; or
- hammers positioned at the ends of the arms.

Hammer crushers operate at high speed, crushing the olives vigorously. However, such a crushing method may cause certain problems, including:
- a higher extraction of bitter and pungent compounds (such as polyphenols),
- an increased risk of overheating of the paste, and
- higher wear of the mechanical components of the machine.

Due to their small size and position at the ends of the arms, the hammers may be fixed using reversible connection means, such as screws or similar devices. Examples of hammer crushers are disclosed in documents EP4331385A1, EP4101542, and KR10150700B1.

For the production of high-quality oils, however, it is preferable to use blade crushers that crush the material using a more delicate and controlled cutting action, thus contributing to obtain an oil with a finer organoleptic profile and a better shelf life.

Whereas the hammers can be effectively connected by means of removable means due to their small size, the blades of the prior art are usually welded or made in one piece with the arms due because of their length and weight, in such a way to ensure the necessary structural rigidity and avoid any possible misalignment during the operation of the crusher. In fact, if the blades are not firmly and rigidly connected to the arms, they may be misaligned during rotation, causing malfunctions, vibrations, or failures.

For such reasons, the blade crushers according to the prior art are generally made as monolithic blocks, i.e., in one piece or with blades that are permanently welded to the arms.

Consequently, the entire crusher must be replaced in case of worn blades, resulting in high costs and prolonged machine downtime.

Similarly, if a different type of blade is to be used (to obtain a paste with different chemical and organoleptic characteristics), the entire crushing block must be replaced.

The purpose of the present invention is to overcome the drawbacks of the prior art by providing a blade crusher with removable blades, i.e. blades that can be connected to and disconnected from the arms, while ensuring operational safety, mechanical stability, and high performance during crushing.

A further purpose of the present invention is to devise a crusher wherein the blades can be used for a working time longer than the standard working time for which they are normally used.

These purposes are achieved in accordance with the invention with the characteristics listed in the attached independent claim 1.

Advantageous embodiments appear from the dependent claims.

The crusher according to the invention is defined by claim 1.

For greater clarity, the description of the crusher according to the invention continues with reference to the attached drawings, which are for illustrative purposes only and are not limiting, wherein:
Fig. 1 is an exploded axonometric view of the crusher according to the invention; in said Fig. 1, the arms are not provided with blades;
Fig. 2 is an axonometric view of the crusher of Fig. 2 in assembled condition;
Figs. 3 and 4 are axonometric views of two different types of arm-holders; in particular, Fig. 3 shows an arm-holder incorporating two arms and Fig. 4 shows an arm-holder incorporating three arms;
Fig. 5 shows different types of blades of the crusher according to the invention;
Fig. 5A is a front view of one of the types of blades shown in Fig. 5.
Fig. 6 is a rear view of a blade of the crusher;
Fig. 7 is a diagrammatic front view of a crusher arranged inside a crushing chamber of a crushing machine.

With reference to the attached figures, a crusher according to the invention, which is generally indicated with reference numeral (100), is described.

The crusher (100) is suitable for being disposed inside a conventional crushing chamber (M1) of a crushing machine.

The crushing chamber (M1) is bounded laterally by a cylindrical grid (M13).

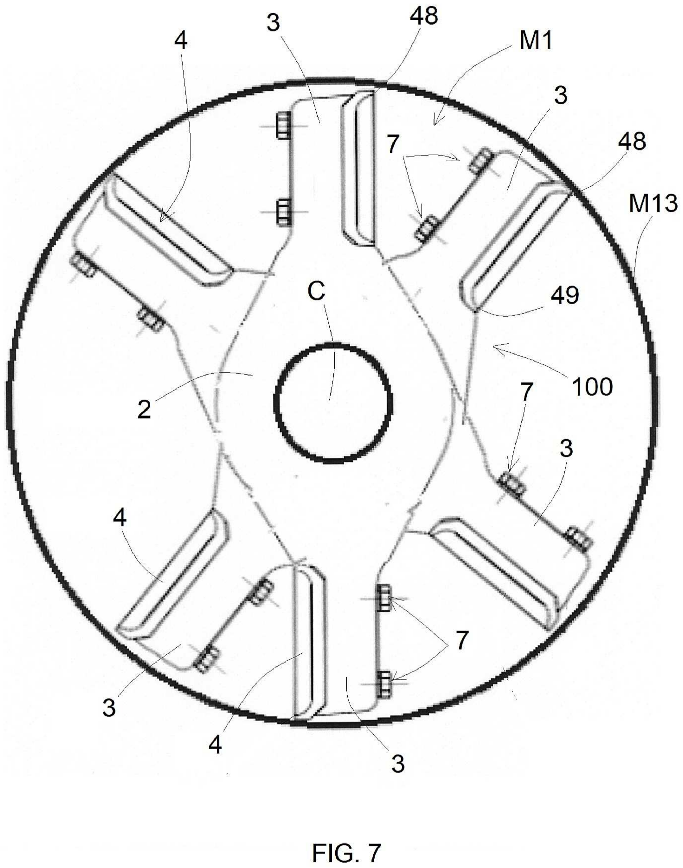

Fig. 7 diagrammatically shows a crushing chamber (M1) bounded by a cylindrical grid (M13) that houses the crusher (100).

The crusher (100) is suitable for being rotatably coupled with a shaft (A) of the crushing machine.

The shaft (A) has an axis of rotation (X) and is suitable for being connected to drive means of the crushing machine in order to be rotated around the axis of rotation (X).

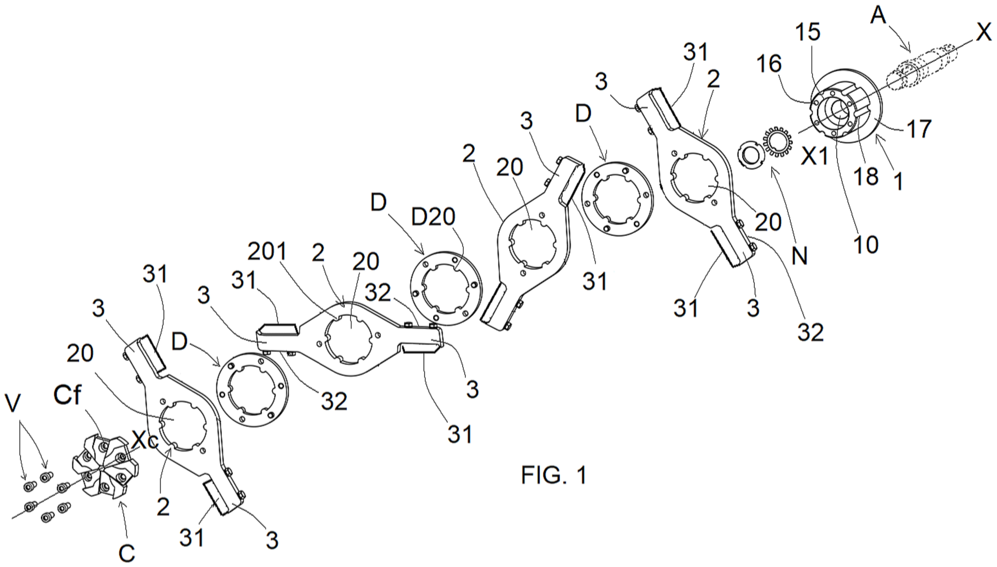

With reference to Fig. 1, the crusher (100) comprises a hub (1) with an axis (X1). The hub (1) is suitable for being integrally connected with said shaft (A). The hub (1) comprises a cylindrical axial seat (10) suitable for fitting the shaft (A) and being integrally coupled to the shaft (A). The cylindrical axial seat (10) is integrally coupled to the shaft (A) by means of coupling means (N) comprising a nut locking system with conical fitment.

The hub (1) has an annular front edge (15) comprising threaded holes (16). The hub (1) comprises a stop flange (17) located at a rear end of the hub (1).

The crusher (100) further comprises a cover (C) disposed in opposite position to the front edge (15) of the hub (1) and having a central axis (Xc) coaxial with the axis (X1) of the hub (1). The cover (C) has through holes (Cf) aligned with the threaded holes (16) of the front edge (15) of the hub (1).

Screws (V) are inserted into the through holes (Cf) of the cover (C) and screwed into the threaded holes (16) of the front edge (15) of the hub (1).

The crusher (100) further comprises support arms (3) for crushing bodies that protrude outwardly from the hub (1).

Each arm (3) comprises a front face (31) facing in the same direction in which the hub (1) is suitable for rotating, a rear face (32) opposite said front face (31), and two side faces (33).

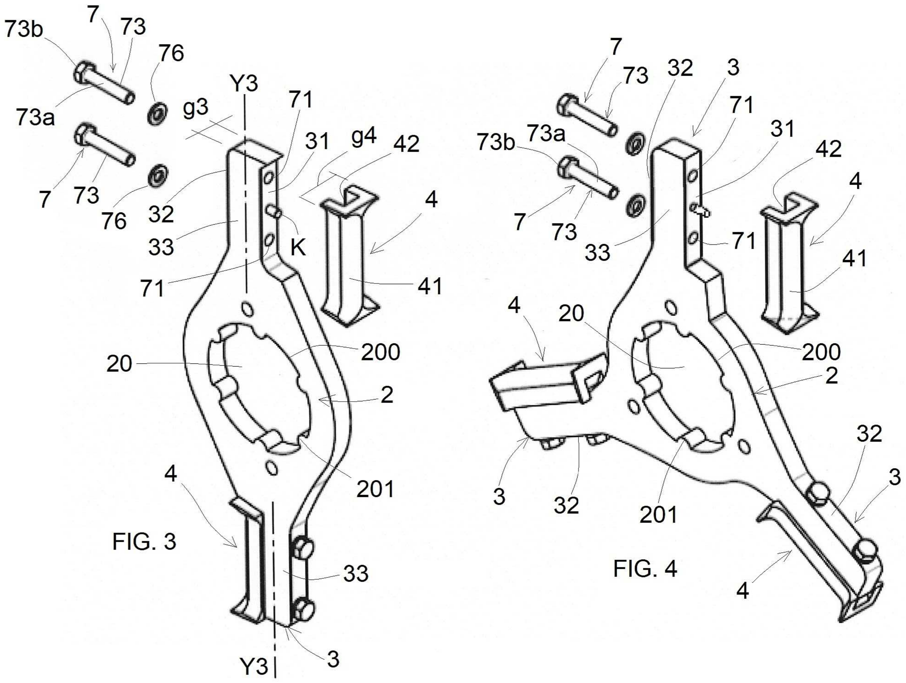

With reference to Fig. 3, each arm (3) has a longitudinal axis (Y3). Each arm (3) has a width (g3) measured as the distance between the two side faces (33) of the arm (3).

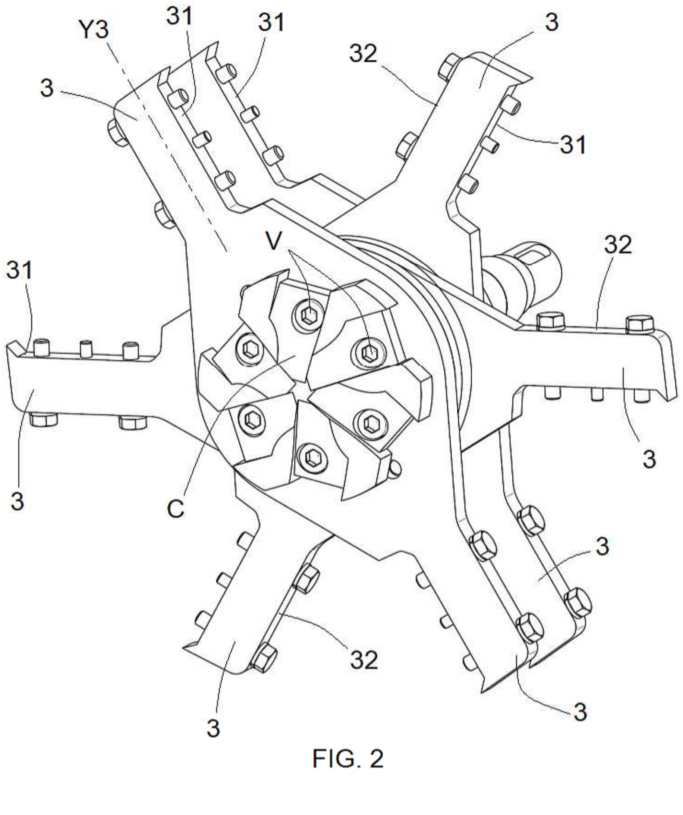

Returning now to Figs. 1 and 2, advantageously, the crusher (100) further comprises one or more arm-holding plates (2), each one incorporating one or more of said arms (3). Each arm-holding plate (2) has a central hole (20) suitable for fitting the hub (1).

For illustrative purposes, Figs. 3 and 4 show two different arm-holding plates (2), namely an arm-holding plate (2) provided with two arms (3) (see Fig. 3) and an arm-holding plate (2) provided with three arms (3) (see Fig. 4).

Said anti-rotational means (18, 201) are configured to provide a grooved coupling between the arm-holding plate (2) and the hub (1).

In particular, said anti-rotational means (18, 201) comprise:
- longitudinal grooves (18) formed on the outer surface of the hub (1);
- protuberances (201) that protrude from a perimeter edge (200) delimiting the hole (20) of the arm-holding plate (2) and are coupled with said longitudinal grooves (18) of the hub (1).

With reference to Fig. 1, spacers (D) may be arranged around the hub (1), each one having a hole (D1) suitable for fitting the hub (1). Coupling means (18, D20) integrally and rotatably connect said hub (1) to said spacers (D). Said coupling means (18, D20) are configured to provide a grooved coupling between the spacer (D) and the hub (1).

The coupling means (18, D20) always comprise the longitudinal grooves (18) formed on the outer surface of the hub (1) and protuberances (D20) that are formed on a perimeter edge (D2) delimiting the hole (D1) of the spacer (D) and are coupled with said longitudinal grooves (18) of the hub (1).

The arm-holding plate (2) or arm-holding plates (2) and said spacers (D) are enclosed in a package configuration and compressed between the stop flange (17) of the hub (1) and the cover (C).

The crusher (100) comprises a crushing body for each arm (3).

Each crushing body is a blade (4) having an elongated shape with a longitudinal axis (Y4) extending in parallel direction to the longitudinal axis (Y3) of the arm (3).

Each blade (4) is arranged on the front face (31) of the arm (3). The blade (4) comprises a working face (41) facing in the rotational direction of the hub (1), and a non-working face (42) opposite the working face (41) and facing the front face (31) of the arm (3).

A cutting profile (410) is formed on the working face (41), extending longitudinally on the working face (41) and being configured to cut and crush the fruits intercepted by the blade during the rotation of the crusher.

For each arm (3), the crusher (100) further comprises connection means (7) configured to removably connect the crushing body, i.e. the blade (4), to the respective arm (3) so that the crushing body, i.e. the blade (4), can be quickly connected to and disconnected from the arm (3).

The connection means (7) preferably comprise threaded parts suitable for creating a threaded connection between the blade (4) and the arm (3).

In particular, the connection means (7) comprise:
- through holes (71) formed on the arm (3) and passing through the arm (3) from the rear face (32) of the arm (3) to the front face (31) of the arm (3);
- threaded holes (72) formed on the non-working face (42) of the blade (4) and aligned with the through holes (71);
- a screw (73) for each pair of holes (71, 72); each screw (73) comprises a threaded body (73a) that passes through the through hole (71) and engages with the threaded hole (72), and a head (73b) that operates against the rear face (32) of the support arm (3).

In particular, there are two through holes (71) and two threaded holes (72), which are disposed one on top of each other.

Preferably, said connection means (7) also comprise a washer (76) interposed between the head (73b) of the screw (73) and the rear face (32) of the arm (3).

The crusher (100) also comprises centering means (k, x) interposed between each blade (4) and the respective arm (3).

The centering means (k, x) comprise a pin (k) protruding from the front face (31) of the arm (3) and a hole (x) formed on the non-working face (42) of the blade (4).

The pin (k) is interposed between the two through holes (71). The pin (k) and the two through holes (71) are aligned along the same axis parallel to a longitudinal axis of the arm (3).

The centering means (k, x) significantly facilitate the assembly of the blade (4) to the arm (3). In fact, during assembly, the centering means are first coupled together so that the blade (4) is temporarily and firmly attached to the arm. Successively, the connection means (7) are applied to secure the blade (4) to the arm (3).

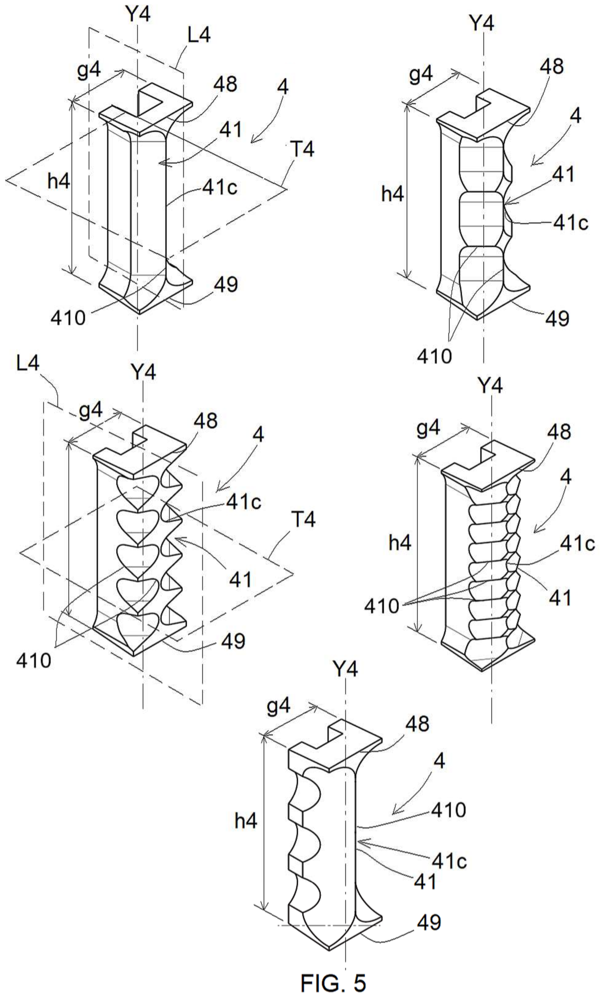

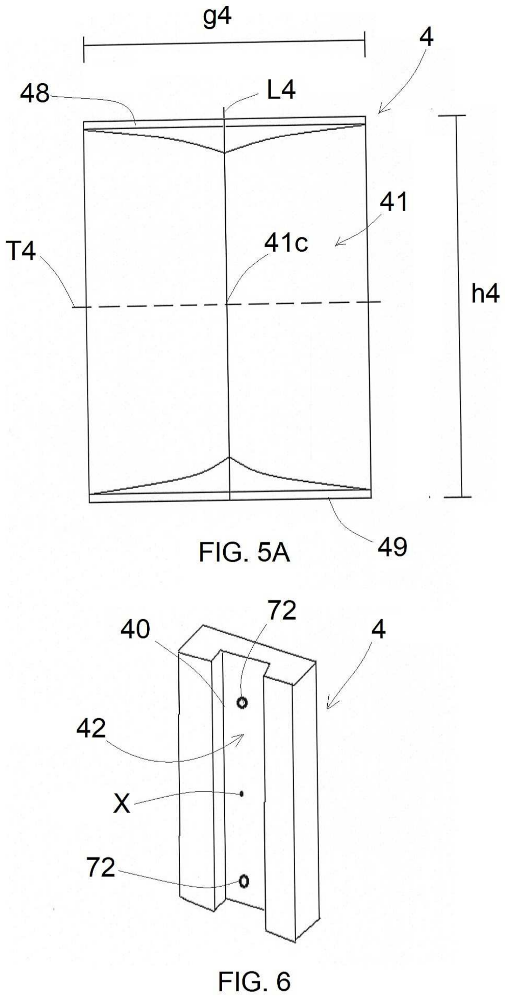

With reference to Fig. 5, by way of example, different types of blades (4) are shown, which can be mounted on the arms (3) by means of the connection means (7).

Each blade (4) comprises a metal plate having an elongated shape that extends along the longitudinal axis (Y4).

The blade (4) has a length (h4) and a width (g4) lower than the length (h4).

Furthermore, each blade (4) comprises a first ending edge (48) and a second ending edge (49) orthogonal to the longitudinal axis (Y4) of the blade (4), which extend for the entire width (g4) of the blade (4).

The first ending edge (48) superiorly delimits the working face (41) of the blade (4), and the second ending edge (49) inferiorly delimits the working face (41) of the blade (4).

The first ending edge (48) of the blade (4) is suitable for grazing the grid (M13) of the crushing chamber of the crushing machine during the rotation of the crusher (100).

With reference to Figs. 5 and 5A, a central point (41c) can be identified on the working face (41) of the blade, which is located at the midpoint of the length (h4) of the blade (4) and at the midpoint of the width (g4) of the blade (4).

The following can be identified on the blade (4):
- a longitudinal median plane (L4), passing through the longitudinal axis (Y4) and through the central point (4c) of the blade (4), which divides the working face (41) of the blade (4) into a right side and a left side; and
- a transverse median plane (T4) orthogonal to the longitudinal axis (Y4) of the blade (4) and passing through the central point (41c) of the blade (4), which divides the working face (41) of the blade (4) into an upper part and a lower part.

The second ending edge (49) and the first ending edge (48) are symmetrical with respect to the transverse median plane (T4).

Furthermore, the working face (41) is symmetrical both with respect to the transverse median plane (T4) and with respect to the longitudinal median plane (L4).

Otherwise said, the right and left parts of the working face (41) are symmetrical with respect to the longitudinal plane (L4), and the upper and lower parts of the working face (41) are symmetrical with respect to the transverse plane (T4).

Therefore, by rotating the blade (4) upside down by 180°, the working face (41) of the blade (4) always has the same configuration and can therefore be indifferently used:
- either with the second ending edge (49) facing the hub (1) and the first ending edge (48) facing the opposite direction and suitable for grazing the cylindrical grid (M13) of the crushing chamber;
- or with the first ending edge (48) facing the hub (1) and the second ending edge (49) facing the opposite direction and suitable for grazing the cylindrical grid (M13) of the crushing chamber.

Preferably, the entire blade (4) is symmetrical with respect to its longitudinal median plane (L4) and with respect to its transverse median plane (T4).

For illustrative purposes, Fig. 5 shows five different types of tools (4). Without prejudice to the aforementioned condition whereby the working face (41) is symmetrical both with respect to the longitudinal median plane (L4) and with respect to the transverse median plane (T4), the blades (4) shown in Fig. 5 differ from each other in the configuration of the working face (41), which defines different types of cutting edge (410) formed on the working face (41).

By way of example, in some embodiments of the invention, said working face (41) may have two smooth side walls that converge towards each other, defining a central cutting edge (410) that extends longitudinally along the working face (41) of the blade (4).

Or, in other embodiments of the invention, said working face (41) may be faceted or include alveolar cavities whose perimeter edges define the cutting edge (410).

With particular reference to Fig. 6, each blade (4) has a U-shaped cross-section with concavity facing the arm (3) in such a way that on the non-working face (42) of the blade (4) there is a longitudinal seat (40) suitable for partially accommodating the arm (3). The threaded holes (72) of the connection means (7) and the hole (x) of the centering means (k, x) are formed on the bottom of said longitudinal seat (40).

Therefore, the blade (4) has a width (g4) that is greater than the width (g3) of the arm (3).

The fact that the blade (4) has a longitudinal seat (40) configured to partially accommodate the arm (3) ensures a structurally solid coupling between the two components, significantly increasing the rigidity of the blade (4)-arm (3) assembly.

In spite of the fact that the blade (4) is connected to the arm (3) by means of connection means (7), such a configuration effectively prevents the blade (4) from being tilted or misaligned with respect to the arm (3) during operation, thus ensuring that the desired alignment is maintained even in the presence of high dynamic stresses.

After the above description, the advantages of the present invention are now evident.

Firstly, due to the provision of the connection means (7), it is possible to replace only the worn blades (4) without having to discard the entire crusher (100).

Furthermore, thanks to the symmetry of the working face (41) of each blade (4) with respect to the longitudinal plane (L4) and to the transverse plane (T4), when the first ending edge (48) of a blade (4) is worn, the blade (4) can be disconnected and successively reconnected to the arm in an upside-down position so that the second ending edge (49) of the blade (4) replaces the first worn ending edge (48) of the blade (4) without altering the crushing function of the blade (4).

It should be emphasized again that the provision of the longitudinal seat (40), which is configured to accommodate the arm (3), at least partially, allows for using the connection means (7) for connecting the blade (4), as such a longitudinal seat (40) improves the stability of the coupling with the arm and prevents the blade from being misaligned with the arm during operation.

Numerous modifications can be made to the present embodiment of the invention, which are within the reach of an expert of the field and fall in any case within the scope of the invention as disclosed by the attached claims.

## Claims

1. Crusher (100) of a crushing machine for oleaginous fruits, such as olives and the like; wherein said crushing machine comprises a crushing chamber (M1) that is laterally bounded by a cylindrical grid (M13), and a shaft (A) that has an axis of rotation (X) and is suitable for being connected to drive means of the crushing machine in order to be rotated about the axis of rotation (X); and wherein said crusher (100) comprises:
- a hub (1) with an axis (X1) that is suitable for being integrally and rotatably connected with said shaft (A);
- arms (3) projecting from the hub (1) having a longitudinal axis (Y3); each arm (3) comprises a front face (31) facing the same direction in which the hub (1) is suitable for rotating, a rear face (32) opposite said front face (31), and two side faces (33);
- one crushing body for each arm (3), each one being mounted on the front face (31) of an arm (3);
- connection means (7) configured to removably connect a crushing body to its respective arm (3);
**characterized in that** each crushing body is a blade (4) having an elongated shape with a longitudinal axis (Y4) that extends in parallel direction to the longitudinal axis (Y3) of the arm (3), and having a width (g4) lower than the length (h4); wherein said blade (4) comprises a working face (41) facing the direction of rotation of the hub (1) and a non-working face (42) facing the arm (3); wherein said blade (4) comprises a first ending edge (48) suitable for grazing the cylindrical grid (M13) of the crushing chamber (M1) of the crushing machine, and a second ending edge (49) opposite said first ending edge (48); said first ending edge (48) and said second ending edge (49) delimit said working face (41) of the blade (4); wherein a cutting profile (410) is formed on said working face (41), extending longitudinally on the working face (41);
wherein, when seen in cross-section, said blade (4) has a U-shape with concavity facing the arm (3) in such a way that on the non-working face (42) of the blade (4) there is a longitudinal seat (40) suitable for partially receiving the arm (3).

2. The crusher (100) according to claim 1, wherein said crusher (100) comprises centering means (k, x) interposed between each blade (4) and the respective arm (3).

3. The crusher (100) according to claim 2, wherein said centering means (k, x) comprise a pin (k) that protrudes from the front face (31) of the arm (3) and a hole (x) formed on the non-working face (42) of the blade (4).

4. The crusher (100) according to any of the preceding claims, wherein said connection means (7) comprise threaded parts suitable for providing a threaded connection between the blade (4) and the arm (3).

5. The crusher (100) according to any of the preceding claims, wherein said connecting means (7) comprise:
- through holes (71) formed on the support arm (3) and passing through the support arm (3) from the rear face (32) to the front face (31);
- threaded holes (72) formed on the non-working face (42) of the blade (4) and aligned with the through holes (71);
- a screw (73) for each pair of holes (71, 72); each screw (73) comprises a threaded body (73a) that passes through the through hole (71) and is engaged with the threaded hole (72), and a head (73b) that abuts against the rear face (32) of the arm (3).

6. The crusher (100) according to any of the preceding claims, wherein said first ending edge (48) and said second ending edge (49) are both orthogonal to the longitudinal axis of the blade (4) and extend across the entire width (g4) of the blade (4).

7. The crusher (100) according to any of the preceding claims, wherein a central point (41c) can be identified on the working face (41) located at the midpoint of the length (h4) of the blade (4) and at the midpoint of the width (g4) of the blade (4);
where the following can be identified on the blade (4):
- a longitudinal median plane (L4) passing through the longitudinal axis (Y4) and through the central point (41c) of the blade (4), which divides the working face (41) of the blade (4) into a right part and a left part; and
- a transverse median plane (T4) orthogonal to the longitudinal axis (Y4) of the blade (4) and passing through the central point (41c) of the blade (4), which divides the working face (41) of the blade (4) into an upper part and a lower part;
wherein the second ending edge (49) and the first ending edge (48) are symmetrical with respect to the transverse median plane (T4) of the blade (4).

8. The crusher (100) according to claim 7, wherein the working face (41) of the blade (4) is symmetrical with respect to the transverse median plane (T4).

9. The crusher (100) according to claim 7 or 8, wherein the working face (41) of the blade (4) is symmetrical with respect to the longitudinal median plane (L4).
